(19) **Europäisches Patentamt**

**European Patent Office**

**Office européen des brevets**

(11) Publication number: **0 328 298**
**A2**

(12) # EUROPEAN PATENT APPLICATION

(21) Application number: **89300986.0**

(22) Date of filing: **01.02.89**

(51) Int. Cl.⁴: **B 29 C 43/22**
**B 29 C 35/08, G 03 H 1/02**

(30) Priority: **12.02.88 GB 8803252**

(43) Date of publication of application:
**16.08.89 Bulletin 89/33**

(84) Designated Contracting States:
**AT BE CH DE ES FR GB GR IT LI LU NL SE**

(71) Applicant: **MARKEM SYSTEMS LIMITED**
**Ladywell Trading Estate Eccles New Road**
**Salford M5 2DA Lancashire (GB)**

**ADVANCED HOLOGRAPHICS LIMITED**
**243-253 Lower Mortlake Road**
**Richmond Surrey; TW9 2LL (GB)**

(72) Inventor: **Tomkins, Don William**
**83 Beacon Road Loughborough**
**Leicester, LE11 2BG (GB)**

(74) Representative: **Massey, Alexander et al**
**MARKS & CLERK Suite 301 Sunlight House Quay Street**
**Manchester, M3 3JY (GB)**

(54) **Manufacture of relief holograms.**

(57) A continuous method of manufacturing relief holograms, comprises the steps of providing, between a transparent web of plastics film and a surface to be replicated, a coating of ultra violet curable liquid monomer resin, and irradiating the latter by ultra violet light directed through the transparent web of plastics film to cause the monomer resin to crosslink and form a solid matrix which, on one side, has taken up the contours of the surface to be replicated.

Apparatus suitable for carrying out the continuous method comprises means for applying to one surface of a moving layer of transparent plastics film web a coating of ultra violet curable liquid monomer resin, a rotary drum mounting on its circumferential surface one or more replicatable elements against which the resin-coated surface of the moving transparent plastics film web is applied, and ultra violet light means at least partially surrounding the drum to direct ultra violet light through the transparent plastics web to effect crosslinking of the monomer resin coating to form a solid matrix which on the drum side takes up the contours of the replicatable elements.

Description

# MANUFACTURE OF RELIEF HOLOGRAMS

This invention relates to the manufacture of relief holograms, gratings and diffractive decorative patterns in film form (hereinafter and in the claims for convenience simply referred to as "relief holograms"). The invention may be employed to produce a film substrate suitable for use as a self adhesive label stock. The present invention may be said to be characterised as being one of involving surface relief replication by continuous liquid monomer casting and in situ irradiation curing.

A known method of relief hologram manufacture involves the embossing of thermoplastic materials, and the present invention offers several advantages over this known conventional embossing technology. Some of these advantages are:-

1) Well know technologies may be utilised.

2) Only low stress and modurate tolerance engineering is required.

3) The manufacturing apparatus may be directly and simply scaled to accommodate any web width.

4) Simple attachment and low wear of replicatable elements, e.g. nickel shims, is possible.

5) Higher definition of replicated surface is possible.

6) Durable, resilient substrate produced.

7) Energy efficient method of manufacture.

According to the present invention there is provided apparatus for continuously manufacturing relief holograms, the apparatus comprising movable support means, replicatable element means mounted on a surface of the movable support means for movement therewith, means for coating one surface of a web of transparent plastics film with a layer of ultra violet curable liquid monomer resin, means for applying the resin-coated surface of the transparent plastics film web against the replicatable element means for movement therewith, ultra violet light means for directing ultra violet light towards the movable support means and through the transparent plastics film web travelling with the movable support to effect crosslinking of the monomer resin coating to form a solid matrix which takes up the contours of the replicatable elements means, and means for separating the resin-coated replicated plastic film web from the movable support.

Also according to the present invention there is provided a continuous method of manufacturing relief holograms comprising the steps of conveying replicatable element means along a predetermined path, applying a surface of a moving web of transparent plastics film against the replicatable element means, which surface has previously been coated with an ultra violet curable liquid monomer resin, directing ultra violet light through the moving web of transparent plastics film to irradiate the latter and cause the monomer resin to crosslink and form a solid matrix which takes on the contours of the replicatable element means in contact therewith, and thereafter separating the resin-coated replicated transparent plastics film web from the replicatable element means.

The present invention is also a strip of relief holograms manufactured by the apparatus and/or the method hereinbefore defined.

An embodiment of the present invention will now be described, by way of example, with reference to the accompanying drawings, in which:

Figs. 1 to 1B are diagrams illustrating the continuous method of relief hologram manufacture according to the invention; and

Fig. 2 is a diagrammatic longitudinal view of a preferred form of apparatus for carrying out the method.

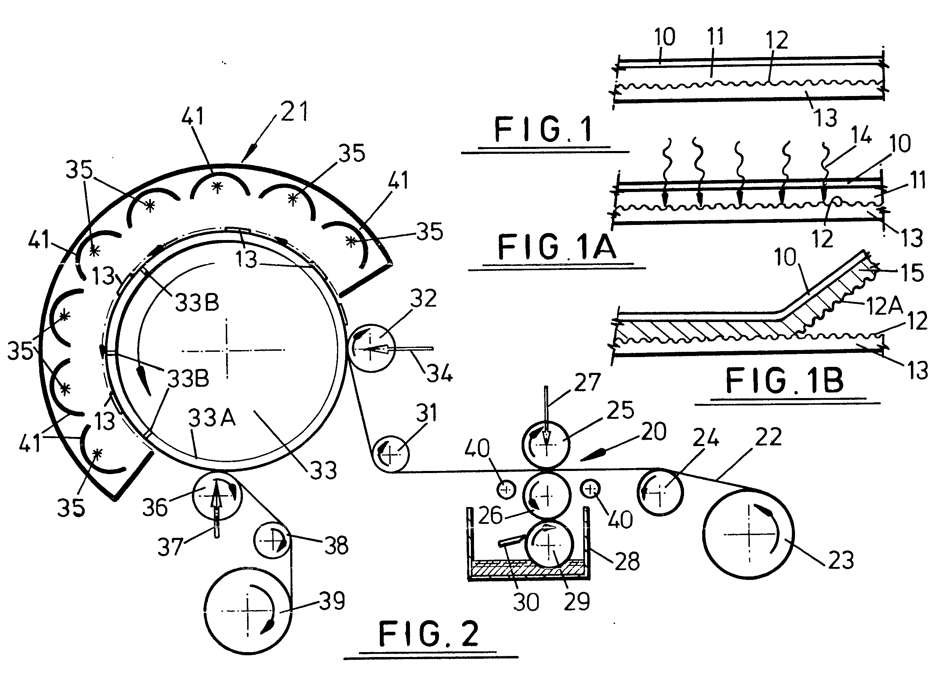

Figs. 1 to 1B diagrammatically illustrate the steps of the continuous method of manufacturing relief holograms according to this invention.

The method comprises firstly the step of applying to one surface of a web of transparent plastics film 10 a coating of ultra violet curable monomer resin 11 and thereafter applying the latter directly against a contoured surface 12 of a nickel shim 13, which surface 12 is to be replicated (see Fig. 1).

Secondly, the method comprises the step of directing through the transparent plastics film 10 ultra violet light 14 (see Fig. 1A). This has the result of crosslinking the monomer resin and forming it into a solid matrix 15 (see Fig. 1B) which adheres to the plastics film web 10 and which has taken up the contour 12A (see Fig. 1B) of the contoures surface 12 of the nickel shim 13.

Thirdly, the method comprises the step of separating the combined plastics film web 10 and the contoured solid matrix 15 from the nickel shim 13 and this is possible due to the selection of a monomer resin 11 and plastics film 10 which provides a greater adhesion therebetween than between the monomer resin 11 and the nickel shim 13.

Referring now to Fig. 2, the apparatus comprises a plastics film web coating section 20 capable of uniformly coating (in terms of thickness) a web of plastics film with the monomer resin, and a continuous casting/irradiation curing section 21 for forming the contoured solid matrix/plastics film web assembly.

More specifically, a thin transparent plastics film web 22 is unwound from a reel 23 and is guided by a roller 24 into the coating section 20. The coating section 20 consists of a steel backing roller 25 which is held against a resilient rubber transfer roller 26 by means of two pneumatic cylinders 27. The transfer roller 26 is fed with a measured amount of liquid monomer resin contained in a bath 28 from a gravure roller 29 metered by a doctor blade 30. The coating thickness is controlled by the combined effect of the applied nip pressure (cylinders 27), the gravure roller coarseness, the viscosity of the liquid monomer resin and the web speed. The coated web 22 is guided by a roller 31 into a nip created by a rubber roller 32 and a rotary drum 33 which are part of the continuous casting/irradiation curing section 21. The peripheral surface of the rotary drum 33 is covered with a set of close fitting thin nickel shims 13 (only some indicated). These shims 13 have on their outer surface a holographic pattern encoded in the form of relief undulations (see Figs. 1 to IB). The roller 32 is held against the drum by means of two air (pneumatic) cylinders 34.

The roller 32 serves to exclude air from the liquid monomer resin/shim surface interface and to ensure uniform wetting across the width of the drum surface. Rotation of the drum 33 causes the coated web 22 in contact with it to pass beneath a series of linear ultra violet lamps 35. Drum rotation speed and size of the drum are adjusted to ensure that the monomeric resin layer has crosslinked sufficiently before reaching a roller 36. The polymerised resin layer and adherent plastics film web are separated uniformly from the drum 33 by means of the resilient rubber roller 36 which is held against the drum 33 by two air (pneumatic) cylinders 37. The replicated web 22 is now guided by a roller 38 to a wind-up reel 39. The replicated web 22 may now be vacuum coated with aluminium and sized or 'sticky' coated depending upon the end use of the material.

The offset gravure coating section 20 given by way of example does not in any way limit the scope of this invention. The basic requirement for this section is to produce a uniform coat of liquid monomer resin of given thickness onto the transparent plastic web.

Support rollers 40 may be used in conjunction with the roller 25. If all three rollers are moved vertically together, the web 22 is lifted clear of the offset transfer roller 26. In this way monomer resin coating is discontinued but uncoated film can still be passed through the apparatus. This allows a convenient method of 'threading up' a particular roll of starting material or 'winding off' a completed roll. In use, the end of the monomer resin coated web is followed by a length of uncoated web and in this way all liquid monomer resin is cleaned from the drum 33 before web transport is terminated.

Many other coating arrangements are possible to give the most effective coating arrangement with regard to the particular monomer resin system adopted.

Referring again to the continuous casting/irradiation curing section 21, a cylindrical sleeve 33A has the nickel 'embossing' shims 13 mounted on its outer surface. This cylinder 33A is fitted over the drum 33 and secured to it, say, by screws indicated diagrammatically at 33B. The drum 33 is driven by a variable speed motor and the rollers 32 and 36 are arranged to idle against the outer surface of the web 22. A nip pressure between the drum 33 and the rollers 32 and 36 of a few lbs/linear inch is maintained by the air cylinders 34 and 37 respectively acting on bearings at the ends of each roller. By the use of double acting air cylinders the rollers may be spaced from the drum to allow 'threading up' of the film web, etc. The roller 32 performs several functions:-

a) it excludes all air from the liquid monomer resin/shim surface.

b) it ensures uniform 'wetting' by the liquid monomer resin of the full width of the drum surface.

c) it ensures unifrom distribution of liquid monomer resin across web width, gravure patterning of monomer layer will be removed in the coating section due to the use of offset transfer roller 26.

d) it accommodates any thickness non-uniformity of the embossing shims 13.

As the applied nip pressure is low, a resilient rubber may be used in the construction of this roller 32. A rubber must be selected that is inert to the liquid monomer resin used.

The linear ultra violet lamps 35 and associated reflectors 41 are arranged radially around the drum 33 and with their longitudinal axes parallel to the axis of the drum 33.

The roller 36 is of the same construction as the roller 32 and provides a convenient method of uniformly separating the replicated surface from the embossing shims. At the point of separation, a line of separation exists across the web 22 and as the method proceeds, this line effectively. propagates along the length of the web. The phenomena is analogous to crack propagation in solid materials.

If the crack tip (or point of separation) slows suddenly or stops, the radius of the crack tip changes rapidly in order to accommodate the increased local stress experienced relative to that experienced in the travelling case. In the case of low modulus plastic materials this sudden increase in local stress can only be accommodated by a microstuctural deformation. In a gross case these will be seen as a curved transverse line in the surface. The polymerised layer must therefore be effectively 'peeled' from the underlying shim in a uniformly continuous manner if the formation of transverse cosmetic defects in the web is to be avoided.

The size of the drum 33 is determined by the circumferential length required to ensure sufficient polymerisation of the liquid monomer resin before it reached the roller 36. This in turn is governed by:-

1) The type of liquid monomer resin selected

2) The power of each ultra violet lamp.

3) The number of ultra violet lamps required.

4) The web speed desired.

5) The degree of ultra violet absorbance of the web material.

It should also be noted, that the embossing shims do not necessarily have to be produced from a metal such as nickel. Provided the material is inert to the liquid monomer resin in use and has good release properties, then a wide range of possibilities exist including resilient materials such as silicone rubbers. The lack of environmental processing strain and the corresponding lack of shim distortion will allow large format patterns to be built up by the use of adhesives and the accurate cutting and joining of individual shims. It is considered that the above method offers the only viable method of producing a continuous pattern, whose design would be minimally disrupted by the joints between individual shims making up the complete replicating cylinder. This method also offers further scope in the production of mixed image formats on a particular width of process web, and thereafter, a means of separating the cured solid matrix which has taken up the contours of the replicatable elements from the surface of the latter.

## Claims

1. Apparatus for continuously manufacturing relief holograms, the apparatus comprising movable support means, replicatable element means mounted on a surface of the movable support means for movement therewith, means for coating one surface of a web of transparent plastics film with a layer of ultra violet curable liquid monomer resin, means for applying the resin-coated surface of the transparent plastics film web against the replicatable element means for movement therewith, ultra violet light means for directing ultra violet light towards the movable support means and through the transparent plastics film web travelling with the movable support to effect crosslinking of the monomer resin coating to form a solid matrix which takes up the contours of the replicatable elements means, and means for separating the resin-coated replicated plastic film web from the movable support.

2. Appartus as claimed in claim 1, in which the movable support means is a rotary drum.

3. Apparatus as claimed in claim 2, in which the replicatable element means is a plurality of replicatable elements detachably mounted on the rotary drum.

4. Apparatus as claimed in claim 3, in which the replicatable elements are mounted on a sleeve adapted to be releasably fitted onto and around the rotary drum.

5. Apparatus as claimed in any one of claims 2 to 4, in which the ultra violet light means comprises a plurality of angularly-spaced, linear ultra violet lamps disposed around an arc of the rotary drum.

6. Apparatus as claimed in any one of claims 1 to 5, in which the monomer resin applying means comprises a roller arrangement including an offset transfer roller associated with a bath of liquid monomer resin.

7. Apparatus as claimed in claim 6, in which the offset transfer roller is associated with a gravure roller with which cooperates a metering doctor blade whereby the transfer roller applies a controlled thickness of liquid monomer resin onto the surface of the transparent plastics film web.

8. Apparatus as claimed in any one of claims 2 to 7 in which a pressure-applied resilient roller forms an entry nip with the rotary drum for the coated plastics film web, the resilient roller serving to exclude air from the liquid monomer resin/replicatable element interface and to ensure uniform wetting across the rotary drum width.

9. Apparatus as claimed in any one of claims 2 to 8 in which a pressure-applied resilient roller forms an exit nip with the rotary drum for the coated replicated plastics film web to ensure separation of the latter from the surface of the rotary drum.

10. Apparatus as claimed in any one of claims 3 to 9 in which the replicatable elements comprise nickel shims mounted on the surface of the rotary drum and each presenting outwardly of the drum surface a contoured surface to be replicated.

11. Apparatus as claimed in claim 1 in which the movable support means is an endless belt on which the replicatable element means are mounted.

12. Apparatus as claimed in claim 11, in which the ultra violet light means comprises a plurality of ultra violet lamps spaced along the length of the endless belt.

13. A continuous method of manufacturing relief holograms comprising the steps of conveying replicatable element means along a predetermined path, applying a surface of a moving web of transparent plastics film against the replicatable element means, which surface has previously been coated with an ultra violet curable liquid monomer resin, directing ultra violet light through the moving web of transparent plastics film to irradiate the latter and cause the monomer resin to crosslink and form a solid matrix which takes on the contours of the replicatable element means in contact therewith, and thereafter separating the resin-coated replicated transparent plastics film web from the replicatable element means.

14. A method as claimed in claim 13, comprising the step of applying the coated web surface against the surface to be replicated under pressure.

15. A method as claimed in claims 13 or 14, comprising the step of selecting an ultra violet curable liquid monomer resin and a plastics film such that the adhesion of the solid matrix (crosslinked monomer resin) to the plastics film is greater than that to the surface of the replicatable element means so that the combined plastics film and solid matrix can be removed from the surface to be replicated.

16. A method as claimed in any one of claims 13 to 15, comprising the step of forming the contoured surface of the replicatable element means of an unoxidised metal.

17. A method as claimed in any one of claims 13 to 16 comprising the step of controlling the thickness of the coating of ultra violet curable liquid monomer resin applied to the transparent plastics film web layer to ensure uniformity of thickness of the applied monomer resin coating.

18. A method as claimed in any one of claims 13 to 17, comprising the step of excluding air from between the coating of liquid monomer resin and the contacted surface of replicatable element means.

19. A method as claimed in any one of claims 13 to 18 in which the surface of the replicatable element means is characterised in that it is inert to the liquid monomer resin and has good release properties relative thereto.

20. A method as claimed in any one of claims 13 to 19 in which the replicatable element means comprises at least one nickel or other metal shim or a non-metallic surface of, for example, elastomer or plastic.

21. A strip of relief holograms manufactured by the apparatus claimed in any one of claims 1 to 12 and/or the method claimed in any one of claims 13 to 20.

FIG. 1

FIG. 1A

FIG. 1B

FIG. 2